# EUROPÄISCHE PATENTSCHRIFT

(11) **EP 0 857 364 B1**
(45) Veröffentlichungstag und Bekanntmachung des Hinweises auf die Patenterteilung: **29.12.1999**
(21) Anmeldenummer: 96945524.5
(22) Anmeldetag: 24.10.1996
(51) Int. Cl.: H02G 5/00

(54) **EINSPEISEKASTEN**
POWER FEED BOX
BOITE D'ALIMENTATION

(30) Priorität: 28.10.1995 DE 19540335
(43) Veröffentlichungstag der Anmeldung: 12.08.1998
(73) Patentinhaber: Moeller GmbH, 53115 Bonn (DE)
(72) Erfinder: VON HASSELT, Georg, D-54576 Hillesheim (DE); AMMANN, Eckhard, D-53819 Seelscheid (DE); MOELLER, Hans, D-53121 Bonn (DE)
(86) Internationale Anmeldenummer: DE9602016
(87) Internationale Veröffentlichungsnummer: WO9715970

(56) Entgegenhaltungen:
- EP-A- 0 148 130
- EP-A- 0 335 756
- EP-A- 0 369 230
- DE-A- 4 121 639
- DE-A- 4 141 799
- DE-A- 4 302 783
- DE-C- 2 031 090
- US-A- 4 009 920
- US-A- 5 092 786
- US-A- 5 325 267

## Beschreibung

Die vorliegende Erfindung betrifft einen Einspeisekasten zum Einspeisen von elektrischer Energie in Stromschienen eines Energieverteilsystems, mit mehreren in einem Gehäuse angeordneten Kontaktorganen aus elektrisch leitendem Material, wobei das Kontaktorgan zur elektrischen Verbindung eines Einspeisekabels mit einem freien Ende einer entsprechenden Stromschiene eine Kabelaufnahme und ein erstes Kontaktelement aufweist, und wobei das Kontaktorgan ein zweites Kontaktelement zur elektrischen Verbindung des Einspeisekabels mit einem freien Ende einer zweiten, sich an die erste Stromschiene anschließenden Stromschiene derselben Phase aufweist, so daß die Kontaktaufnahme mit den benachbarten freien Enden zweier gleichphasiger Stromschienen elektrisch verbunden ist.

Energieverteilsysteme werden vornehmlich in Werkstätten, Labors, Ausstellungsräumen, Krankenhäusern, Gewächshäusern oder dergleichen eingesetzt, in denen der Stromverbrauch den eines üblichen Haushalts übersteigt. Deshalb sind die hier in Rede stehenden Energieverteilsysteme für einen Strom von 40 A und mehr ausgelegt.

Innerhalb der Energieverteilsysteme wird der Strom in sogenannten in Schienenkanälen angeordneten Stromschienen transportiert. Bei den bekannten Energieverteilsystemen sind in jedem Schienenkanal vier Stromschienen vorgesehen, wobei jede Stromschiene die Energie in einer anderen Phase transportiert, so daß ein Schienenkanal einen L1, L2, L3 und einen N Leiter aufweist.

Die Schienenkanäle sind üblicherweise zwei Meter oder drei Meter lang und werden an Decken, Wänden oder dergleichen montiert. Der Übergang zwischen zwei Schienenkanälen wird durch ein Übergangsstück hergestellt, welches an jedem Schienenkanal mit zwei Schrauben festgeschraubt wird und die jeweiligen Stromschienen elektrisch miteinander verbindet. Um eine schnelle und einfache Montage der Schienenkanäle zu erreichen, werden diese bündig auf Stoß an der Wand oder Decke montiert, bevor das deckelartig ausgebildete Übergangstück an zwei benachbarten Schienenkanälen angeschraubt wird.

Zur Herstellung der elektrischen Verbindung sind auf den Innenseite des Übergangsstückes vier Klemmstücke angeordnet, die bei der Montage des Übergangsstückes auf Stromschienen der gleichen Phase geklemmt werden und so die elektrische Verbindung herstellen.

Zur Stromentnahme sind an den Schienenkanälen in regelmäßigen Abständen Abgangsstellen vorgesehen, an denen sogenannte Abgangskästen befestigt werden können. Diese Abgangskästen weisen je nach Einsatzzweck Schalt- oder Schutzgeräte, Schmelzsicherungen, Magnetsicherungen oder handelsübliche Schuko-Steckdosen auf. Diese Abgangskästen sind einzeln abnehmbar und können entsprechend den vorliegenden Gegebenheiten an der jeweils gewünschten Abgangsstelle angebracht werden.

Der in dem Energieverteilsystem zu verteilende Strom wird über sogenannte Einspeisekästen in die Stromschienen eingespeist. Bei den bekannten Energieverteilsystemen geschieht dies üblicherweise, indem an einem freien Ende des Schienenkanals, also am Anfang oder am Ende des Schienenkanals, der Einspeisekasten montiert wird, der über ein Einspeisekabel mit der Energiequelle verbunden ist.

Ein derartiges Energieverteilsystem ist beispielsweise aus dem Prospekt der Firma Telemecanique "Panorama P C 04" vom März 1990 oder aus der FR-OS 88 04 261 bekannt.

Bei einer Einspeisung des Stroms am Anfang oder am Ende des Schienenkanales ist es je nach den räumlichen Gegebenheiten sehr mühsam und kostenaufwendig, eine Verbindung zwischen dem Einspeisekasten und dem Hauptstromanschluß herzustellen. Dies ist insbesondere dann der Fall, wenn die Anschlüsse an das Stromnetz vom Anfang oder vom Ende des Schienenkanals besonders weit entfernt sind.

Weitere Probleme können dann auftreten, wenn der Hauptstromabnehmer in großer Entfernung vom Einspeisekasten angesiedelt ist, so daß der ganze Strom einen vergleichsweise weiten Weg zu der betreffenden Abgangsstelle zurückzulegen hat. Dies kann insbesondere zu einer erhöhten Wärmeentwicklung und auch zu hohen Transportverlusten führen.

Zur Behebung dieser Nachteile hat die Firma Klöckner-Moeller in ihrem Prospekt "Power Direktion - wirtschaftliche Energieverteilsysteme / W 37 - 7351" vom April 1994 vorgeschlagen, den Strom innerhalb des Energieverteilsystems einzuspeisen. Hierzu werden zwei benachbarte Schienenkanäle so weit voneinander beabstandet montiert, daß der die freien Enden der benachbarten Schienenkanäle aufnehmende Einspeisekasten dazwischenpaßt.

Im Einspeisekasten ist zur elektrischen Verbindung zweier benachbarter Stromschienen gleicher Phase eine Stromschienenklemme vorgesehen, welche auf die freien Enden der jeweiligen Stromschienen aufgebracht wird. In der Mitte jeder Stromschienenklemme ist ein Kabel angeschraubt, welches die Verbindung zu einer darüberliegenden Kabelaufnahme herstellt. In der Kabelaufnahme sind die einzelnen Adern des zumeist senkrecht zum Schienenkanal mündenden Einspeisekabels befestigt.

Derartige Einspeisekästen müssen bei der Planung und Auslegung des Energieverteilsystems berücksichtigt werden, damit der vom Einspeisekasten benötigte Platz zwischen den entsprechenden Schienenkanälen an der gewünschten Stelle bereitgestellt wird. Dies erfordert die volle Aufmerksamkeit des jeweiligen Planers und außerdem ist es notwendig, daß sich der Planer des jeweiligen Energieverteilsystems präzise und detaillierte Informationen über die räumlichen Gegebenheiten, über die Nutzung des Energieverteilsystems und über die Anschlußsstellen für die Stromversorgung verschafft. Dies ist, wenn überhaupt, nur mit einem großen Kostenaufwand möglich.

Ein weiterer Nachteil der bekannten Einspeisekästen besteht darin, daß der Ort der Einspeisung in einem bestehenden Energieverteilsystem nicht wirklich verändert werden kann. Sollte sich die Anordnung der zu versorgenden Verbraucher einmal ändern, oder sollte sich aufgrund von Umbaumannahmen die Anschlußsstelle für die Stromversorgung ändern, so kann das bestehende Energieverteilsystem nicht kostengünstig an die neue Situation angepaßt werden.

**Die EP 0 369 230 A1 zeigt einen Schienenverteiler mit Abgangskästen, die derart an ersten und zweiten Kontaktstücken der Stromschienen zusammenwirken, daß der Abgangskasten quer zu den Längsachsen der Stromschiene auf diese aufsetzbar ist.**
**Zur Verbindung der Stromschienen sind jedoch Schrauben erforderlich, was die Montagezeit erhöht.**

**Wie die elektrische Energie in die Stromschienen eingespeist wird, ist jedoch weder gezeigt noch beschrieben.**

Davon ausgehend liegt der vorliegenden Erfindung die Augabe zugrunde, einen Einspeisekasten zum Einspeisen von elektrischer Energie in Stromschienen eines Energieverteilungssystems zu schaffen, **der in einfacher Weise** an nahezu jeder beliebigen Stelle des Energieverteilsystems angebracht werden kann, und der zu einem späteren Zeitpunkt an eine andere Stelle des Energieverteilsystems versetzt werden kann.

Die gestellte Aufgabe wird durch die Merkmale des Anspruchs 1 gelöst.

An der Nahtstelle zweier benachbarter Schienenkanäle, an der die freien Enden der Stromschienen mit ihren Kontaktstücken offen zugänglich sind, wird der Einspeisekasten derart quer zum Schienenkanal auf diesen aufgesetzt, daß die ersten und zweiten Kontaktelemente des Kontaktorganes mit den Kontaktstücken der Stromschiene eine elektrische Verbindung bilden.

Ein nach dieser technischen Lehre ausgebildeter Einspeisekasten zum Einspeisen von elektrischer Energie in Stromschienen eines Energieverteilsystems hat den Vorteil, daß er nach Montage der Schienenkanäle angebracht werden kann, wobei es unerheblich ist, an welcher Nahtstelle zweier benachbarter Schienenkanäle der Einspeisekasten angebracht wird. Hierdurch entsteht der wesentliche Vorteil, daß die Lage des Einspeisekastens nicht länger auf eine bestimmte Stelle beschränkt ist, sondern daß der Einspeisekasten nunmehr an jeder beliebigen Nahtstelle zweier Schienenkanäle anbringbar ist. Hierdurch erhöht sich die Anzahl der möglichen Einspeisepunkte des Energieverteilsystems deutlich.

Ein weiterer Vorteil besteht darin, daß der Einspeisekasten jederzeit wieder vom Schienenkanal entfernt werden kann, um ein einer anderen Stelle des Schienenkanals wieder angebracht zu werden.

Noch ein weiterer Vorteil besteht darin, daß der Einspeisepunkt bei der Planung des Energieverteilsystemes noch nicht berücksichtigt werden braucht, denn der Einspeisekasten kann an nahezu jeden beliebigen Ort des Energieverteilsystems angebracht werden. Hierdurch wird die Planung und Auslegung eines Energieverteilsystems deutlich vereinfacht.

Ein erfindungsgemäßer Einspeisekasten muß nicht nicht zwingend an die Nahtstelle zweier benachbarter Schienenkanäle angebracht werden, sondern er kann bei Bedarf auch an dem Anfang oder dem Ende des Schienenkanalsystems angebracht werden.

Noch ein weiterer Vorteil besteht darin, daß das Energieverteilsystem zu jederzeit durch einen zweiten oder dritten Einspeisekasten ergänzt werden kann, so daß durch den zusätzlichen Einspeisepunkt einem erhöhten Stromverbrauch Rechnung getragen werden kann.

Der erfindungsgemaße Einspeisekasten ist also universell zur Anfangs-, End- oder Mitteneinspeisung geeignet und kann auch nachträglich an dem Schienenkanal angebracht werden.
Auch ist es möglich den Einspeisekasten jederzeit zu versetzen oder die Einspeisung durch einen zweiten Einspeisekasten zu erhöhen. Hierdurch wird die
Variabilität des Energieverteilsystems deutlich verbessert und seine Planung deutlich vereinfacht.

**Erfindungsgemäß weist das Kontaktorgang eine Stromschienenklemme mit einem ersten und zweiten Kontaktelement auf. Bei der Montage des Einspeisekastens auf den Schienenkanälen wird die Stromschienenklemme derart über einen ersten und zweiten, quer von der Stromschiene abstehenden Kontaktstift geschoben, daß eine elektrische Verbindung einerseits zwischen den benachbarten Stromschienen derselben Phase und andererseits zwischen jeder Stromschiene und der Kabelaufnahme entsteht.**

In einer bevorzugten Weiterbildung setzt sich die Stromschienenklemme aus zwei Verbindungsstegen zusammen, die durch Federn gegen die Kontaktstifte gedrückt werden, so daß eine zuverlässige elektrische Verbindung entsteht.

In einer bevorzugten Ausführungsform eines erfindungsgemäßen Einspeisekastens ist die Kabelaufnahme entsprechend den an den Einspeisekabeln angebrachten Steckern ausgebildet, so daß die Einspeisekabel in einfacher Weise am Kontaktorgan befestigt werden können.

In einer anderen, bevorzugten Ausführungsform ist das Kontaktorgan mit selner Kabelaufnahme, seinem ersten und zweiten Kontaktelement und dem Verbindungssteg zwischen den Kontaktelementen und der Kabelaufnahme einstückig ausgeführt. Hierdurch wird eine einfache Fertigung und ein ungehinderter Energiefluß gewährleistet.

Nach einer anderen bevorzugten Ausführungsform eines erfindungsgemäßen Einspeisekastens wird das Gehäuse mittels Befestigungsmitteln, vorzugsweise Befestigungsschrauben, Einrast- oder Einschnappelementen oder Befestigungsklammern an dem Schienenkanal befestigt, wobei die Befestigungsmittel asymmethrisch angeordnet sind.

Dies hat den Vorteil, daß der Einspeisekasten stets in derselben Position am Schienenkanal befestigt werden muß, da ansonsten die am Gehäuse angebrachten Befestigungsmittel nicht mit den am Schienenkanal angebrachten Befestigungsmittel zusammenpassen. Dies ist dann besonders Vorteilhaft, wenn der bereits mit Einspeisekabeln versehene Einspeisekasten vom Schienenkanal abgenommen wird, um an einer anderen Stelle wieder angebracht zu werden. Hierbei ist es wichtig, daß die Einspeisekabel mit der jeweiligen Phase an die richtige Stromschiene angeschlossen werden. Dies wird erfindungsgemäß dadurch gewährleistet, daß der Einspeisekasten nur in einer einzigen Richtung beziehungsweise Anordnung am Schienenkanal befestigbar ist, so daß eine einmal erzielte Zuordnung der Einspeisekabel mit den jeweiligen Stromschienen stets beibehalten wird.

In einer bevorzugten Weiterbildung ist der Einspeisekasten über die Befestigungsschrauben geerdet. Hierzu sind zwei Befestigungschrauben durch ein leitendes Blech miteinander verbunden, an dem eine Kabelaufnahme des Erdungskabels vorgesehen ist. Hierdurch wird eine zuverlässige und effektive Erdung des Energieverteilsystems erreicht.

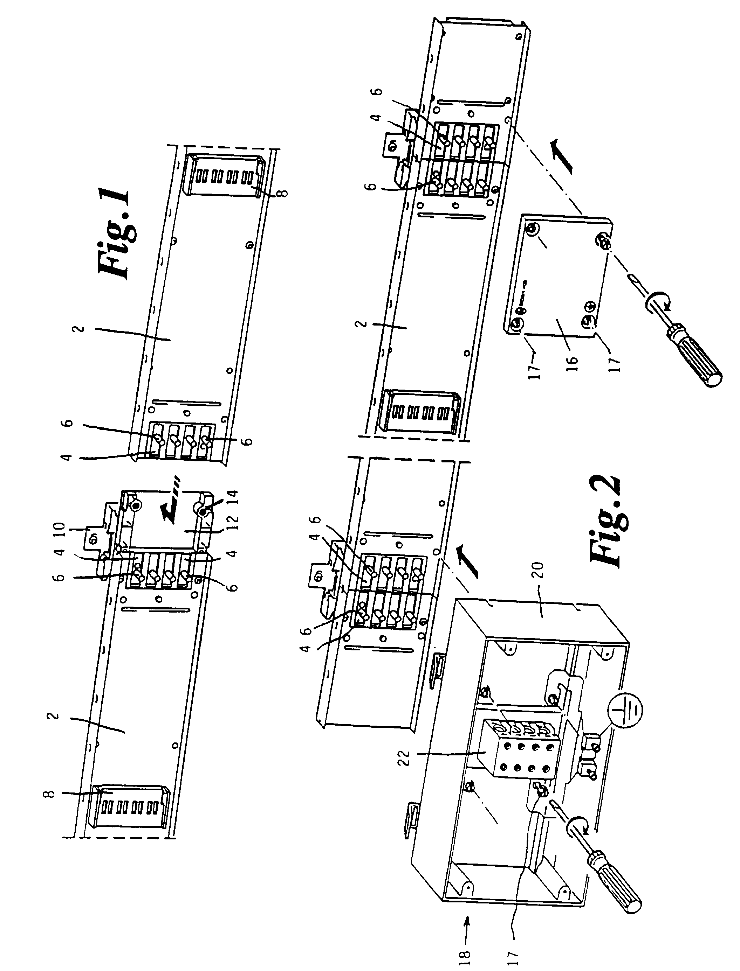

Weitere Vorteile des erfindungsgemäßen Einspeisekastens ergeben sich aus der Beschreibung einer Ausführungsform und der beigefügten Zeichnung. Ebenso können die vorstehend genannten und die noch weiter aufgeführten Merkmale erfindungsgemäß jeweils einzeln oder in beliebigen Kombinationen miteinander verwirklicht werden. Die erwähnten Ausführungsformen sind nicht als abschließende Aufzählung zu verstehen, sondern haben vielmehr beispielhaften Charakter. Eine Ausführungsform der Erfindung ist in den Figuren 1 bis 6 der Zeichnung dargestellt und wird im folgenden näher erläutert.
- Figur 1: zeigt eine perspektivische Darstellung zweier benachbarter Schienenkanäle;
- Figur 2: zeigt eine perspektivische Explosionsdarstellung eines Energieverteilsystems;
- Figur 3: zeigt eine perspektivische Explosionsdarstellung eines Klemmengehäuses eines erfindungsgemäßen Einspeisekastens;
- Figur 4: zeigt eine perspektivische Darstellung eines erfindungsgemäßen Einspeisekastens;
- Figur 5: zeigt eine perspektivische Darstellung eines Einspeisekastens gemäß Figur 4 im eingebauten Zustand;
- Figur 6: zeigt eine perspektivische Darstellung eines Einspeisekastens gemäß Figur 4 mit einem daran angegliederten Gerätekasten.

Die einzelnen Figuren der Zeichnung zeigen den erfindungsgemäßen Gegenstand teilweise stark schematisiert und sind nicht maßstäblich zu verstehen. Dabei sind die Gegenstände der einzelnen Figuren teilweise stark überproportional vergrößert dargestellt, damit ihr Aufbau besser gezeigt werden kann.

In **Figur 1** sind in perspektivischer Darstellung zwei Schienenkanäle **2** dargestellt, in denen vier Stromschienen **4** untergebracht sind. Zur Vermeidung von Kurzschlüssen und/oder Lichtbögen sind die Stromschienen **4** innerhalb des Schienenkanals **2** gut isoliert untergebracht. Lediglich die freien Enden der Stromschienen **4**, sind aufgrund einer Aussparung im Schienenkanal **2** zugänglich. An diesen freien Enden sind quer von Stromschiene **4** abstehende Kontaktstifte **6** angebracht, über die benachbarte Stromschienen **4** miteinander verbunden werden können.

Die Schienenkanäle **2** sind je nach Ausführungsform 2 m oder 3 m lang und haben alle 25 cm oder 50 cm eine Abgangsstelle **8**, an der nicht dargestellte Abgangskästen zur Stromabnahme angebracht werden können.

Zu Befestigung der Schienenkanäle **2** an einer Wand, einer Decke oder dergleichen wird an einer Halterung **10** eine Halteplatte **12** angebracht, die vier asymmetrisch angeordnete Gewindebohrungen **14** aufweist. Auf die Halteplatte **12** werden die Enden der jeweils benachbarten Schienenkanäle **2** aufgesetzt und auf die derart angebrachten Enden der Schienenkanäle **2** wird eine Verbindungsplatte **16** angebracht, die mit in die Gewindebohrungen **14** eingreifenden Befestigungsschrauben an der Halteplatte **12** festgeschraubt wird und somit die Schienenkanäle **2** zuverlässig hält.

Auf der Innenseite der Verbindungsplatte **16** sind nicht dargestellte Stromschienenklemmen angeordnet, die auf die Kontaktstifte **6** zweier benachbarter Stromschienen **4** aufgeschoben werden, um eine elektrische Verbindung der benachbarten Stromschienen **4** gleicher Phase herzustellen.

Wie in **Figur 2** dargestellt ist, kann an der Verbindungsstelle zweier Schienenkanäle **2** anstatt der Verbindungsplatte **16** alternativ ein Einspeisekasten **18** angebracht werden. Hierzu sind im Gehäuse **20** des Einspeisekastens **18** entsprechend den Gewindebohrungen **14** in der Halteplatte **12** Öffnungen **22** vorgesehen, durch die Befestigungsschrauben **17** hindurchgesteckt werden können, mit denen der Einspeisekasten **18** an der Verbindungsstelle zweier Schienenkanäle **2** montiert werden kann.

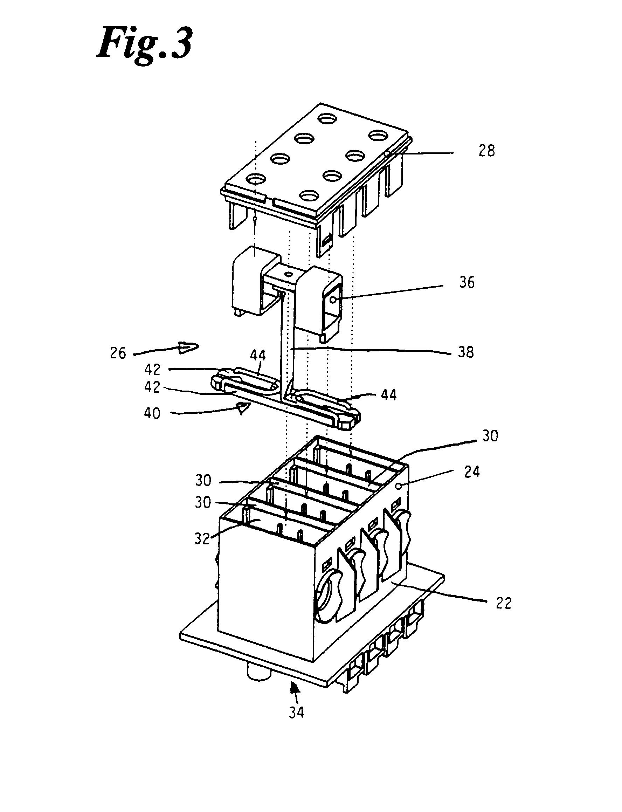

Das im Inneren des Einspeiskastens **18** vorgesehene Klemmengehäuse **22** ist in **Figur 3** vergrößert dargestellt.

Das Klemmengehäuse **22** umfaßt eine Schutzabdeckung **24**, ein Kontaktorgan **26** und einen Deckel **28.** Die Schutzabdeckung **24** ist durch Trennwände **30** in vier Segmente **32** unterteilt, in denen jeweils ein Kontaktorgan **26** untergebracht ist. Die Schutzabdeckung **24** weist an ihren Seiten für jedes Segment **32** eine Kabelöffnung **34** auf, durch die ein nicht dargestelltes Einspeisungskabel hindurch in eine entsprechende Kabelaufnahme **36** des Kontaktorgans **26** gelangen kann.

Das Kontaktorgan **26** hat an seiner Oberseite zwei Kabelaufnahmen **36**, die so ausgebildet sind, daß sie nicht dargestellte Stecker an nicht dargestellten Einspeisekabeln zuverlässig und kontaktsicher aufnehmen können. Die Kabelaufnahmen **26** sind über ein Verbindungselement **38** mit einer Stromschienenklemme **40** verbunden. Die Stromschienenklemme **40** umfaßt zwei Verbindungsstege **42**, die durch Federn **44** gegeneinander gedrückt werden.

Die Stromschienenklemme **40** ist nahe der Unterseite der Schutzabdeckung **24** angeordnet, so daß die Kontaktstifte **6** der Stromschienen **4** durch eine nicht dargestellte Öffnung im Boden der Schutzabdeckung **24** hindurchreichen und zwischen den Verbindungsstegen **42** der Stromschienenklemme **40** zum Anliegen kommen, wenn der Einspeisekasten **18** an den Schienenkanälen **2** angebracht ist. In diesem Zustand drücken die Federn **44** die Verbindungsstege **42** fest gegen die jeweiligen Kontaktstifte **6**, so daß ein zuverlässiger elektrischer Übergang und eine zuverlässige Verbindung der Stromschienen **4** mit dem in der Kabelaufnahme **36** befindlichen Einspeisekabel gewährleistet ist.

In der Schutzabdeckung **24** ist für jeden Leiter L1, L2, L3 und N ein separates Kontaktorgan **26** vorgesehen. Diese Kontaktorgane **26** sind durch die Trennwände **30** so voneinander isoliert angeordnet, daß ein Kurzschluß oder ein Lichtbogen ausgeschlossen werden kann.

Das Kontaktorgan **26** ist in dieser Ausführungsform einstückig aus einem elektrisch leitenden Material, vorzugsweise Kupfer oder Aluminium, hergestellt. Zur weiteren Isolierung ist die Schutzabdeckung **24** mit einem Deckel **28** versehen, der die Kontaktorgane **26** nach oben hin abschirmt.

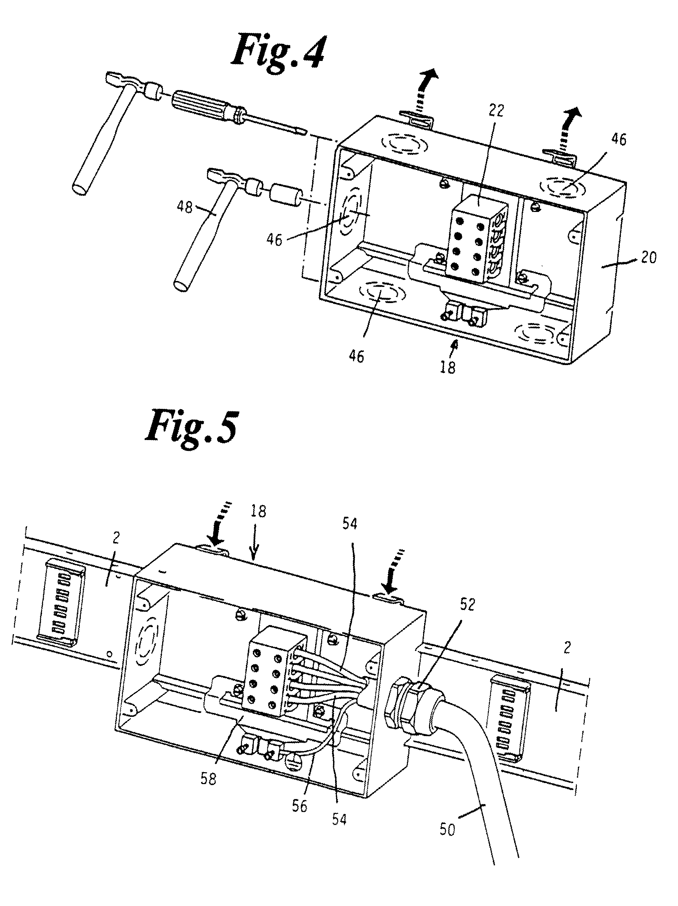

**Figur 4** zeigt eine erfindungsgemäße Ausführungsform eines Einspeisekastens **18.** Dieser Einspeisekasten **18** ist aus Kunststoff gefertigt und weist an den Seitenwänden mehrere kreisrunde Sollbruchöffnungen **46** auf. Diese Sollbruchöffnungen **46** werden durch Materialschwächungen gebildet, so daß mit einem leichten Schlag auf die Sollbruchöffnung **46** mit einem Hammer **48** das innere der kreisrunden Öffnung herausfällt und somit ein Durchgang für die Einspeiseleitung hergestellt ist. Diese Sollbruchöffnung **46** kann an der für den Einzelfall günstigsten Stelle erzeugt werden.

In **Figur 5** ist ein fertig montierter Einspeisekasten **18** gezeigt, bei dem an der rechten, schmalen Seitenwand die Sollbruchöffnung **46** durchbrochen wurde, um eine Einspeiseleitung **50** durch die Sollbruchöffnung **46** hindurchzuführen. Hierbei ist die Einspeiseleitung **50** mittels einer Kabelhalterung **52** am Gehäuse **20** des Einspeisekastens **18** fixiert. Die vier Einspeisekabel **54** sind in der jeweiligen Kabelaufnahme **36** des Klemmengehäuses **22** befestigt, während ein Erdungskabel **56** an einem Erdungsblech **58** befestigt ist. Dieses Erdungsblech aus einem elektrisch leitenden Metall wie Kupfer, Aluminium oder dergleichen wird von zwei Befestigungsschrauben **17** gehalten. Diese Befestigungsschrauben **17** bilden gleichzeitig die Erdung.

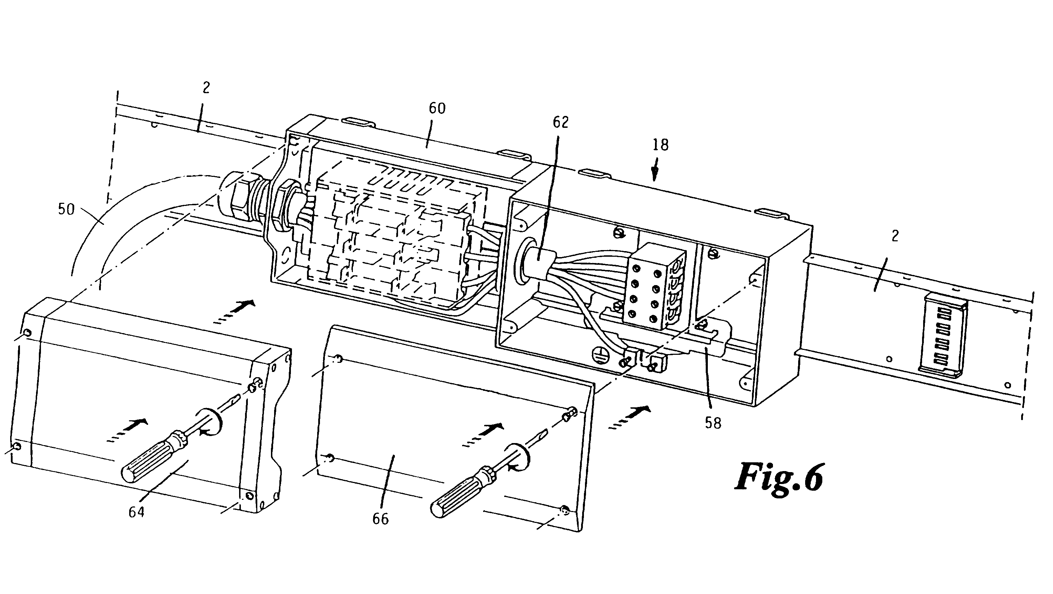

In der in **Figur 6** dargestellten Ausführungsform ist dem Einspeiseksten **18** ein Gerätekasten **60** vorgeschaltet. In diesem Gerätekasten **60** sind nur andeutungsweise dargestellte Schalt-, Schutzgeräte oder auch Sicherungen untergebracht, die zur Steuerung der Stromeinspeisung in das Stromverteilsystem dienen. Dabei sind sowohl der Gerätekasten **60**, als auch das Gehäuse **20** des Einspeisekasten **18** an ihren Schmalseiten eben ausgeführt, so daß beide Kästen bündig aneinander zum Anliegen kommen. Analog zum Einspeisekasten **18** sind auch im Gerätekasten **60** Sollbruchöffnungen vorgesehen, durch die einerseits die Einspeiseleitung **50** und andererseits eine Verbindungsleitung **62** hindurchgeführt werden können.

Zum Schutz gegen Verschmutzung, Beschädigung oder dergleichen wird der Gerätekasten **60** mit einem Gerätekastendeckel **64** und der Einspeisekasten **18** mit einem Gehäusedeckel **66** verschlossen.

## Patentansprüche

1. Einspeisekasten zum Einspeisen von elektrischer Energie in Stromschienen eines Energieverteilsystems, mit mehreren in einem Gehäuse (20) angeordneten Kontaktorganen (26) aus elektrisch leitendem Material, wobei das Kontaktorgan (26) zur elektrischen Verbindung eines Einspeisekabels (54) mit einem freien Ende einer entsprechenden Stromschiene (4) eine Kabelaufnahme (36) und ein erstes Kontaktelement aufweist, und wobei das Kontaktorgan (26) ein zweites Kontaktelement zur elektrischen Verbindung des Einspeisekabels (54) mit einem freien Ende einer zweiten, sich an die erste Stromschiene (4) anschließenden Stromschiene (4) derselben Phase aufweist, so daß die Kabelaufnahme (36) mit den benachbarten freien Enden zweier gleichphasiger Stromschienen (4) elektrisch verbunden ist,
**dadurch gekennze1chnet, daß**
die ersten und zweiten Kontaktelemente der Kontaktorgane (26) derart mit ersten und zweiten Kontaktstücken der Stromschiene (4) zusammenwirken, daß der Einspeisekasten (18) quer zu den Längsachsen der Stromschienen (4) auf diese aufsetzbar ist, daß das erste und zweite Kontaktstück der Stromschiene (4) als quer von der Stromschiene (4) abstehender erster und zweiter Kontaktstift (6) ausgebildet ist, während das erste und zweite Kontaktelement des Kontaktorganes (26) als eine erste und zweite, den ersten und zweiten Kontaktstift (6) aufnehmende Kontaktklemme ausgebildet Ist, und d a β die erste und die zweite Kontaktklemme als eine einheitliche Stromschienenklemme (40) ausgeführt ist.

2. Einspeisekasten nach Anspruch 1,
**dadurch gekennzeichnet, daß**
die Stromschienenklemme (40) zwei Verbindungsstege (42) aufweist, die durch Federn (44) gegen die Kontaktstifte (6) gedrückt werden.

3. Einspeisekasten nach wenigstens einem der vorhergenenden Ansprüche,
**dadurch gekennzeichnet, daß**
die Kabelaufnahme (36) zur Aufnahme von an den Einspeisekabeln (54) angebrachten Steckern ausgebildet ist.

4. Einspeisekasten nach wenigstens einem der vorhergenenden Ansprüche,
**dadurch gekennzeichnet, daß**
das Kontaktorgan (26) einstückig ausgeführt ist.

5. Einspeisekasten nach wenigstens einem der vorhergenenden Ansprüche,
**dadurch gekennzeichnet, daß** das Gehäuse (20) mittels Befestigungsmitteln an einem die Stromschienen (4) tragenden Schienenkanal (2) befestigt ist, wobei die Befestigungsmittel asymetrisch angeordnet sind.

6. Einspeisekasten nach Anspruch 5,
**dadurch gekennzeichnet, daß**
die Befestigungsmittel Befestigungsschrauben (17), Einrast- oder Einschnappelemente oder Befestigungsklammern sind.

7. Einspeisekasten nach Anspruch 6,
**dadurch gekennzeichnet, daß**
der Einspeisekasten (18) über die Befestigungsschrauben (17) geerdet ist.

## Claims

1. Feed box for feeding electrical power into bus bars of a power distribution system, with several contact components (26) made of electrically conductive material and arranged in a casing (20), while the contact component (26) for the electrical connection of a feeder cable (54) with the free end of a corresponding bus bar (4) presents a cable bushing (36) and a first contact element, and while the contact component (26) presents a second contact element for the electrical connection of the feeder cable (54) with the free end of a second bus bar (4) of the same phase following upon the first bus bar (4), so that the cable bushing (36) is electrically connected to the neighbouring free ends of two bus bars (4) belonging to the same phase,
**characterized in that**
the first and second contact elements of the contact components (26) so cooperate with first and second contact pieces of the bus bar (4) that the feed box (18) is mountable on the bus bars (4) in a transverse direction with regard to the longitudinal axes of these bus bars (4), in that the first and second contact piece of the bus bar (4) is designed as a first and second contact pin (6) projecting in transverse direction from the bus bar (4), while the first and second contact element of the contact component (26) is designed as a first and second contact terminal receiving the first and second contact pin (6), and in t h a t the first and the second contact terminal is designed as a uniform busbar terminal (40).

2. Feed box as claimed in claim 1,
**characterized in that**
the busbar terminal (40) presents two connecting webs (42) which are pushed against the contact pins (6) by springs (44).

3. Feed box as claimed at least in one of the foregoing claims,
**characterized in that**
the cable bushing (36) is designed for receiving connectors attached to the feeder cables (54).

4. Feed box as claimed at least in one of the foregoing claims,
**characterized in that**
the contact component (26) forms a single piece.

5. Feed box as claimed at least in one of the foregoing claims,
**characterized in that**
the casing (20) is fixed by fixing means to a busbar duct (2) carrying the bus bars (4), while the fixing means are arranged asymmetrically.

6. Feed box as claimed in claim 5,
**characterized in that**
the fixing means are fastening screws (17), latch-in or snap-in elements, or mounting clamps.

7. Feed box as claimed in claim 6,
**characterized in that**
the feed box (18) is earthed/grounded via the fastening screws (17).

## Revendications

1. Boîte d'alimentation pour l'alimentation en électricité des barres conductrices d'un système de distribution, avec plusieurs organes contacteurs (26) en matériau conducteur électrique disposés dans une boîte (20), chaque organe contacteur (26) présentant une réception de câble (36) et un premier élément de contact pour le raccordement électrique d'un câble d'alimentation (54) à l'extrémité libre d'une barre conductrice (4) correspondante, et l'organe contacteur (26) présentant un second élément de contact pour le raccordement électrique du câble d'alimentation (54) à l'extrémité libre d'une seconde barre conductrice (4) de phase identique raccordée à la première barre conductrice (4), de sorte que la réception de câble (36) est électriquement raccordée aux extrémités libres contiguës de deux barres conductrices (4) de phase identique,
**caractérisée en ce que**
les premier et second éléments de contact des organes contacteurs (26) agissent de concert avec les première et seconde pièces de contact de la barre conductrice (4) de telle manière que la boîte d'alimentation (18) peut être appliquée sur elle perpendiculairement aux axes longitudinaux des barres conductrices (4), que la première et la seconde pièce de contact de la barre conductrice (4) sont formées comme première et seconde broches de contact (6) faisant perpendiculairement saillie de la barre conductrice (4), tandis que le premier et le second élément de contact de l'organe contacteur (26) sont formés comme première et seconde bornes de contact pour la réception des première et seconde broches de contact (6), et que la première et la seconde borne de contact sont exécutées comme borne unique de barre conductrice (40).

2. Boîte d'alimentation selon revendication 1,
**caractérisée en ce que**
la borne de barre conductrice (40) présente deux barrettes de connexion (42) serrées par des ressorts (44) contre les broches de contact (6).

3. Boîte d'alimentation selon l'une des revendications précédentes au moins,
**caractérisée en ce que**
la réception de câble (36) est prévue pour le logement de fiches appliquées sur les câbles d'alimentation (54).

4. Boîte d'alimentation selon l'une des revendications précédentes au moins,
**caractérisée en ce que**
l'organe contacteur (26) est exécuté comme pièce unique.

5. Boîte d'alimentation selon l'une des revendications précédentes au moins,
**caractérisée en ce que**
la boîte (20) est fixée par des moyens de fixation sur une canalisation (2) supportant les barres conductrices (4), lesdits moyens de fixation étant à disposition asymétrique.

6. Boîte d'alimentation selon revendication 5,
**caractérisée en ce que**
les moyens de fixation consistent en vis de fixation (17), éléments de fixation encliquetables ou à ressorts, ou en agrafes de fixation (17).

7. Boîte d'alimentation selon revendication 6,
**caractérisée en ce que**
la boîte d'alimentation (18) est mise à la terre par les vis de fixation (17).
